# EUROPÄISCHE PATENTSCHRIFT

(11) **EP 0 597 269 B1**
(45) Veröffentlichungstag und Bekanntmachung des Hinweises auf die Patenterteilung: **16.04.1997**
(21) Anmeldenummer: 93116555.9
(22) Anmeldetag: 13.10.1993
(51) Int. Cl.: B65G 57/28, B65G 47/252

(54) **Vorrichtung zum Palettieren von insbesondere beutelförmigen Stückgutteilen**
Palettizing device especially for bag-like piece goods
Dispositif de palettisation en particulier pour marchandises en colis en forme de sachet

(30) Priorität: 25.01.1993 DE 4301854; 25.01.1993 DE 9303731 U; 11.11.1992 DE 4237936
(43) Veröffentlichungstag der Anmeldung: 18.05.1994
(73) Patentinhaber: BERNHARD BEUMER MASCHINENFABRIK KG, D-59267 Beckum (DE)
(72) Erfinder: Juergens, Karl-Bernhard, D-59267 Beckum (DE); Krumkamp, Hermann, Dipl.-Ing., D-59329 Wadersloh (DE)
(74) Vertreter: Hoormann, Walter, Dr.-Ing.

(56) Entgegenhaltungen:
- DE-C- 3 816 448
- US-A- 3 807 128

## Beschreibung

Die Erfindung betrifft eine - nachstehend auch kurz als Beutel-Palettierer bezeichnete - Vorrichtung zum Palettieren von insbesondere beutel- bzw. sackförmigen Stückgutteilen, mit einer nachstehend auch als Packblech bezeichneten Lagenbildungsfläche, welcher jeweils mindestens eine Reihe von Stückgutteilen mittels (wenigstens) eines Zuförderers zuzuführen ist.

Palettiervorrichtungen (= Palettierer) dienen bekanntlich dazu, (i. a. zumindest im wesentlichen gleichförmig ausgebildete) Stuckgutteile in i. a. würfel- bzw. quaderförmigen Stückgutstapeln anzuordnen. Hierfür werden von bzw. in dem Palettierer (oder auch bereits zuvor) Stückgutreihen gebildet, aus denen zunächst jeweils Stückgutlagen gebildet werden, welche dann wiederum in geeigneter Weise übereinander angeordnet werden, um letztlich jeweils einen Stückgutstapel zu bilden. Dabei werden die Stückgutteile einer Lage i. a. in einem bestimmten Muster (z. B. sog. Kreuzverband) angeordnet, um die Stapelfestigkeit eines gebildeten Stückgutstapels von vornherein so groß wie irgend möglich zu machen.

Während das Palettieren von Kartons, mit Zement, Kunststoffgranulat od. dgl. gefüllten (Kunststoff-)Säcken u. dgl. mit i. w. symmetrischer Gestalt zwischenzeitlich bereits als gelöst gelten kann, bereitet eine Palettierung kleinerer beutel- bzw. sackförmiger Stückgutteile mit einseitigen Abnähern bzw. Beutelverschlüssen bisher noch (erhebliche) Schwierigkeiten bzw. kann bisher nicht als technisch gelöst angesehen werden, weil die aufgrund ihrer Unsymmetrie in der Handhabung deutlich ungünstiger sind.

Der vorliegenden Erfindung liegt die Aufgabe zugrunde, einen (Beutel-)Palettierer der eingangs beschriebenen Gattung zu schaffen, mit dem insbesondere (auch) beutel- bzw. sackförmige Stückgutteile in zweckmäßiger Weise (d. h. also u. a. auch mit hoher Stapelfestigkeit) zu palettieren sind.

Die Lösung dieser Aufgabe ist erfindungsgemäß gekennzeichnet durch wenigstens einen Schieber od. dgl., mittels dessen eine der Lagenbildungsfläche zugeführte Reihe von Stückgutteilen aus ihrer Zuführposition auf der Lagenbildungsfläche in eine Kipp-Position (= aus der Zuführstellung gekippte Position) zu bringen ist, wobei der (wenigstens eine) Schieber ein Schieber-Kippelement aufweist, mit dem die jeweilige Reihe zugeführter Stückgutteile aus ihrer vorzugsweise aufrechten Zuführstellung in eine hierzu um 90° geschwenkte Palettierstellung umzulegen ist.

Gemäß einer bevorzugten Ausgestaltung ist das Schieber-Kippelement so ausgebildet, daß es jeweils mit einer in Zuführposition befindlichen, zugeführten Reihe von Stückgutteilen in formschlüssigem Eingriff ist. Hierfür ist das Schieber-Kippelement bevorzugt umgekehrt U-förmig ausgebildet, wobei der gegenseitige Abstand der U-Schenkel wenigstens so groß ist (vorzugsweise wenigstens etwas größer) wie die in Bewegungsrichtung des Schiebers gemessene Breite bzw. Tiefe der Stückgutteile.

In bevorzugter Ausgestaltung der vorliegenden Erfindung kann der Schieber außer dem Schieber-Kippelement ein Schieber-Basiselement aufweisen, welches relativ zu dem Schieber-Kippelement beweglich ist, wobei es sich als besonders zweckmäßig erwiesen hat, wenn das Schieber-Kippelement mittels eines entsprechenden Antriebes relativ zu dem Schieber-Basiselement translatorisch beweglich ist.

Um eine besonders schnelle und damit effiziente Palettierung auf der Lagenbildungsfläche des Palettierers durchführen zu können, sind dieser bevorzugt zwei Schieber zugeordnet, wobei sich diese zweckmäßigerweise jeweils in ihrer jeweiligen Zuführstellung an einander gegenüberliegenden Endabschnitten der Lagenbildungsflache befinden können, wie dieses weiter unten anhand eines Ausführungsbeispiels noch weiter erläutert ist. Dabei ergibt sich weiterhin der Vorteil, daß die Beutel so angeordnet werden können, daß jeweils gleiche Beutel- bzw. Sackenden an- bzw. übereinanderliegen, mit einer Ausnahme, so daß nie eine Beutelverschlußseite außen liegt.

Bevorzugte Ausgestaltungen der vorliegenden Erfindung sind in den Unteransprüchen beschrieben.

Die Erfindung ist nachstehend an Ausführungsbeispielen unter Bezugnahme auf eine Zeichnung weiter erläutert. Es zeigt:
- Fig. 1: eine Seitenansicht eines erfindungsgemäßen Beutel-Palettierers in Richtung des Pfeiles I in Fig. 2 gesehen;
- Fig. 2: eine Draufsicht auf den Beutel-Palettierer gemäß Fig. 1 in Richtung des Pfeiles II in Fig. 1 gesehen;
- Fig. 3: eine Seitenansicht der Lagenbildungseinrichtung des Beutel-Palettierers gemäß den Fig. 1 und 2 (in vergrößerter Darstellung) in Richtung des Pfeiles III in Fig. 4 gesehen;
- Fig. 4: eine Seitenansicht der Lagenbildungseinrichtung gemäß Fig. 3 in Richtung des Pfeiles IV in Fig. 3 gesehen;
- Fig. 5: eine Draufsicht auf die Palettiereinrichtung gemäß den Fig. 3 und 4 in Richtung des Pfeiles V in Fig. 3 gesehen;
- Fig. 6: eine vereinfachte perspektivische Darstellung einer Lagenbildungseinrichtung einer Palettiereinrichtung (im wesentlichen gemäß den Fig. 3 bis 6), in welcher sich die zugeführten Stückgutteile in Zuführstellung auf dem Packblech befinden;
- Fig. 7: eine Darstellung gemäß Fig. 6, in welcher die betreffende Reihe von Stückgutteilen auf dem Packblech aus der Zuführstellung (in der Zeichnung nach rechts) bewegt worden ist;
- Fig. 8: eine Darstellung gemäß Fig. 7, bei welcher die zugeführten Stückgutteile aus der Zuführstellung (um 90°) in ihre Palettierstellung umgelegt worden sind;
- Fig. 9: eine den Fig. 7 und 8 entsprechende Darstellung, bei welcher die gemäß Fig. 7 in Palettierstellung verbrachten Stückgutteile zur anderen Seite hin (um 90°) umgelegt worden sind; und
- Fig. 10: eine (wie in Fig. 6 bis 9 vereinfachte) Teil-Darsteilung der Palettiereinrichtung gemäß den Fig. 6 bis 9, bei welcher die beiden in der Palettiereinrichtung vorhandenen Schieber jeweils bereits (Reihen von) Stückgutteile(n) in Palettierstellung umgelegt haben, wobei von diesen Stückgutreihen, die gemeinsam eine Stückgutlage bilden, der besseren Übersicht halber nur einige Stückgutteile (beispielhaft) dargestellt sind.

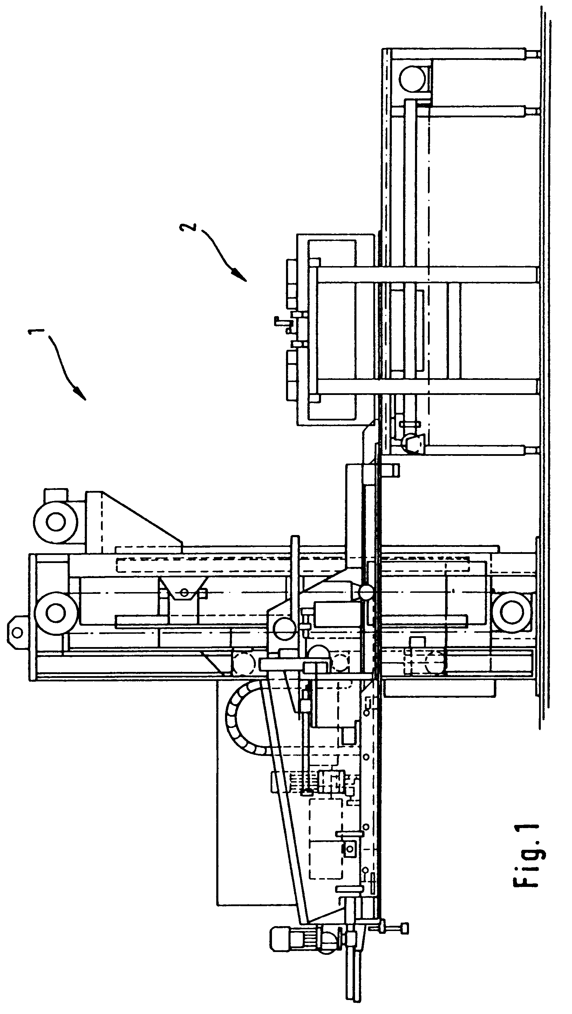

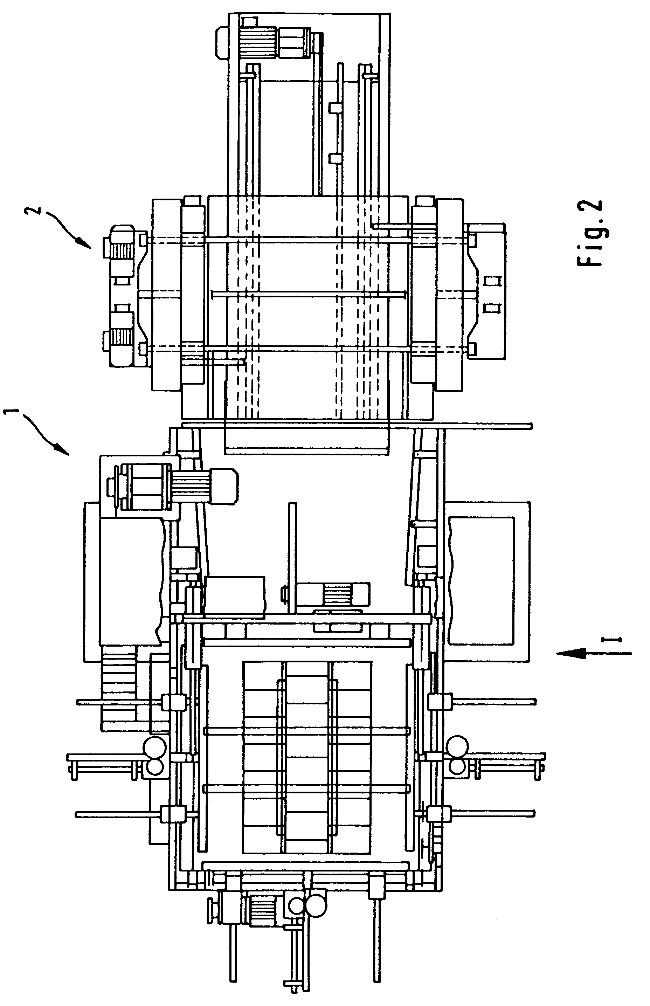

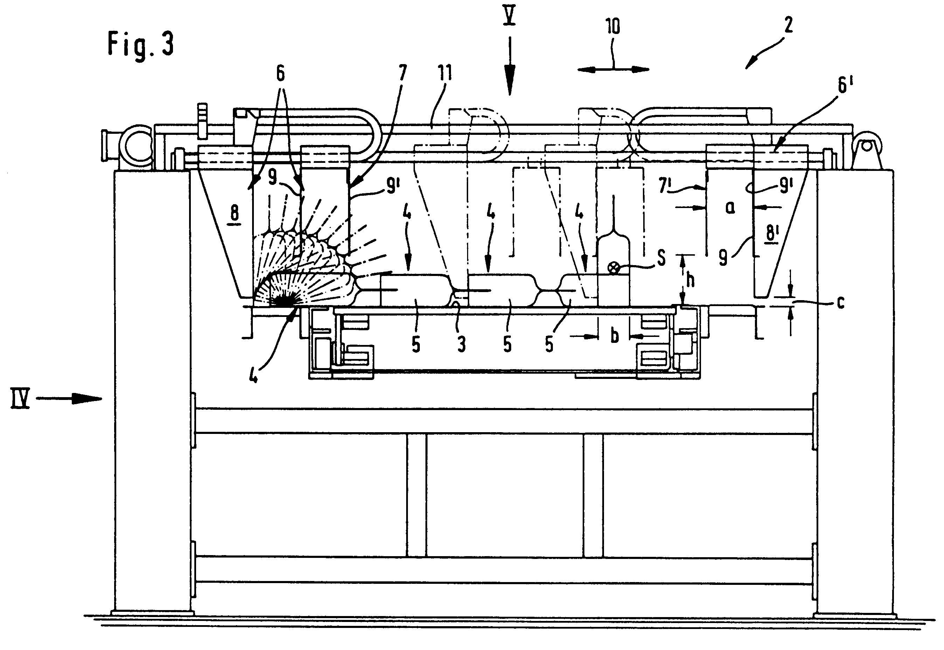

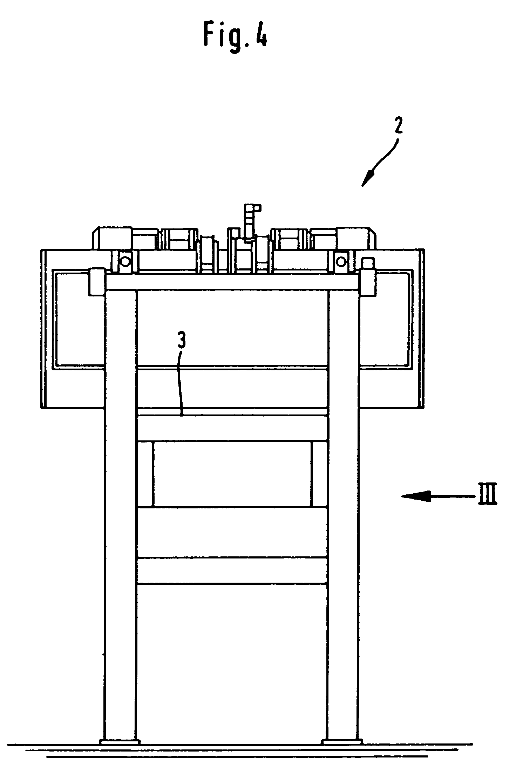

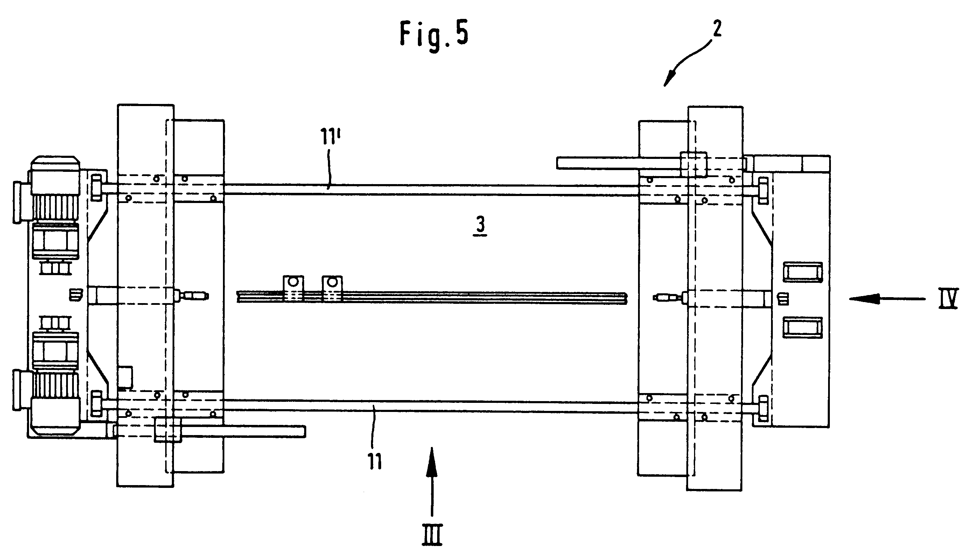

Die Fig. 1 und 2 zeigen einen im ganzen mit 1 bezeichneten Beutel-Palettierer mit einer (vorstehend auch als Palettiereinrichtung bezeichneten) Lagenbildungseinrichtung 2, die in den Fig. 3 bis 10 (in vergrößerter Darstellung) besser erkennbar und anhand dieser Figuren nachstehend weiterhin erläutert ist.

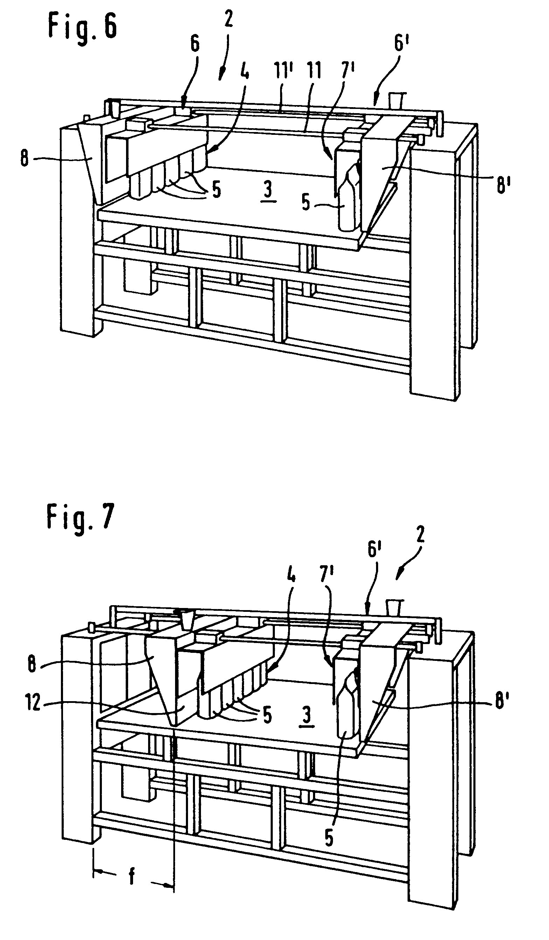

Die Palettiereinrichtung 2 weist eine Lagenbildungsfläche (sog. "Packblech") 3 auf, welcher an jedem Endabschnitt eine Reihe 4 von Stückgutteilen 5 (s. Fig. 6 bis 10) mittels eines im einzelnen nicht dargestellten Zuförderers zuzuführen ist.

Dem Packblech 3 sind zwei Schieber 6, 6' zugeordnet, um die Stückgutteile 5 jeder Reihe 4 aus ihrer Zuführposition (Fig. 6, 7) auf dem Packblech bzw. der Lagenbildungsfläche 3 in eine Kipp-Position bringen zu können.

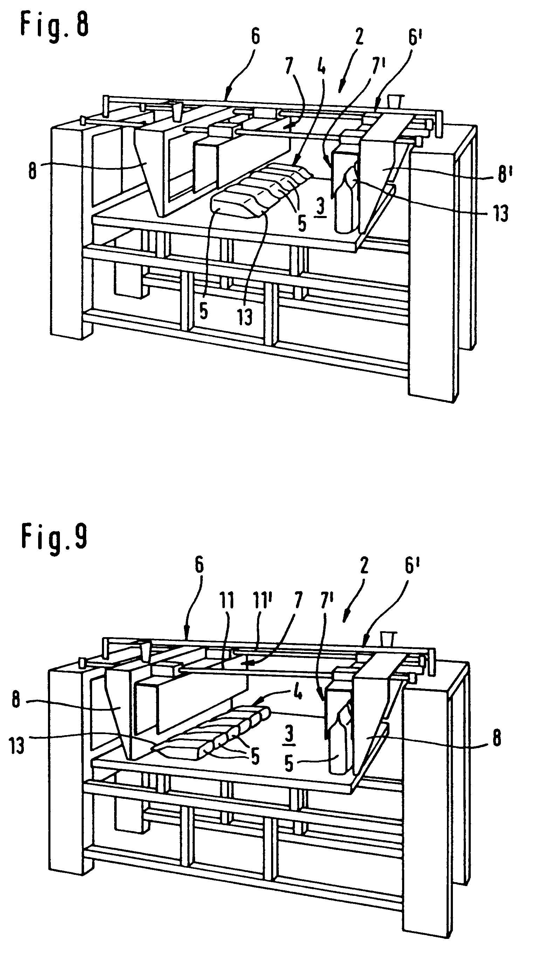

Jeder Schieber 6, 6' weist ein Schieber-Kippelement 7 bzw. 7' sowie ein Schieber-Basiselement 8 bzw. 8' auf, wobei jede Reihe 4 von Stückgutteilen 5 mit dem Schieber-Kippelement 7 bzw. 7' - wie noch im einzelnen ausgeführt werden wird - i. a. unter Relativbewegung des Schieber-Kippelementes 7 bzw. 7' zum Schieber-Basiselement 8 bzw. 8' aus ihrer vorzugsweise aufrechten Zuführstellung (s. Fig. 6, 7) in eine hierzu um 90° geschwenkte Palettierstellung (s. Fig. 8 bis 10) umzulegen ist.

Wie aus den Fig. 3 und 6 bis 10 erkennbar ist, sind die Schieber-Kippelemente 7, 7' so ausgebildet, daß sie jeweils mit einer in Zuführposition befindlichen, zugeführten Reihe 4 von Stückgutteilen 5 in formschlüssigem Eingriff sind, und zwar bei dem in der Zeichnung dargestellten Ausführungsbeispiel derart, daß sie jeweils umgekehrt U-förmig ausgebildet sind, wobei der gegenseite Abstand (a) der U-Schenkel 9, 9' etwas größer ist als die in Bewegungsrichtung 10 (s. Fig. 3) der Schieber (6, 6') gemessene Breite bzw. Tiefe (b) der Stückgutteile 5.

Die beiden Schieber 6, 6' bzw. ihre Schieber-Kippelemente 7, 7' und ihre Schieber-Basiselemente 8, 8' sind an zwei zueinander parallelen Stangenführungen 11, 11' geführt, die sich mit Abstand oberhalb der Lagenbildungsfläche 3 und parallel zu dieser erstrecken.

Es sei noch darauf verwiesen, daß die Schenkel 9, 9' der Schieber-Kippelemente 7 bzw. 7' in größerer Höhe h über dem Packblech 3 enden als die unteren Endabschnitte der Schieber-Basiselemente 8 bzw. 8'. Dabei ist der Abstand h der unteren Schenkelenden der Schieber-Kippelemente 7 bzw. 7' zum Packblech 3 so gewählt, daß der Kraftangriffspunkt des Schieber-Kippelementes 7 bzw. 7' (bzw. dessen Schenkel 9, 9') an den Stückgutteilen 5 jeweils in Abhängigkeit von Form und Größe der Aufstandsfläche der Stückgutteile 5 sowie deren (Haft-)Reibungsverhalten auf dem Packblech 3 in einer solchen Höhe (z. B. oberhalb deren Schwerpunktes S) liegt, so daß an der gewünschten Stelle des Packbleches 3 ein Kippen (in der Zeichnung nach links oder rechts) wahlweise möglich ist, andererseits aber die Reihen 4 von Stückgutteilen 5 mittels der Schieber 6 bzw. 6' auch (insbesondere aus ihrer Zuführstellung in ihre vorgesehene Kippstellung) verschoben werden können, wie dieses nachfolgend noch weiter erläutert ist.

Es sei ausdrücklich darauf verwiesen, daß das gesamte Packblech 3 sowohl von dem einen Schieber 6 als auch von dem anderen Schieber 6' gepackt werden könnte. Bei dem dargestellten Ausführungsbeispiel sind zwei Schieber 6, 6' vorgesehen, um das Bepacken besonders rasch durchführen zu können und damit den Durchsatz des Beutel-Palettierers 1 entsprechend erhöhen zu können. Dabei ergibt sich weiterhin der Vorteil, daß man die Möglichkeit hat, jeweils gleiche Beutelenden aneinander anzuordnen, bis auf eine Ausnahme, so daß nie eine Beutelverschlußseite außen liegt.

Wird eine Reihe 5 von Stückgutteilen 4 dem Packblech 3 der Lagenbildungseinrichtung 2 zugeführt, so gelangen die Stückgutteile in dieser Reihe 5 zwischen die beiden Schenkel 9, 9' des betreffenden Schieber-Kippelementes 7 bzw. 7' des Schiebers 6 bzw. 6' (da dieser Vorgang und auch die weiteren, nachfolgend beschriebenen, jeweils gleich sind, ganz gleich, ob diese Zuführung etc. auf der linken oder rechten Seiten des Packbleches 3 erfolgt, wird nachstehend die Wirkungsweise im wesentlichen lediglich bzgl. des Schiebers 6 beschrieben).

Fig. 6 zeigt (im linken oberen Teil) eine solche Reihe 4 von Stückgutteilen 5 innerhalb des Schieber-Kippelementes 7, welches in diesem Zustand dem zugehörigen Schieber-Basiselement 8 unmittelbar benachbart ist, wie aus Fig. 6 erkennbar ist.

Sodann bewegt sich der gesamte (aus dem Schieber-Kippelement 7 und dem Schieber-Basiselement 8 bestehende) Schieber 6 unter (auf dem Packblech 3 gleitender) Mitnahme der Stückgutteile 5 an den Stangenführungen 11, 11' geführt zur Mitte hin und erreicht nach einem bestimmten Verfahrweg f die Stellung gemäß Fig. 7. Obwohl sich der Kraftangriffspunkt des Schieber-Kippelementes 7 an den Stückgutteilen 5 relativ hoch befindet, kippen diese bei dieser Bewegung (noch) nicht etwa um - wie dieses der Fall wäre, wenn sich nur das Schieber-Kippelement 7 nach rechts bewegen würde -, da - wie ausgeführt - der Schieber 6 insgesamt nach rechts bewegt wird und demgemäß durch die Vorderseite 12 des Schieber-Basiselementes 8 eine Schub- und Anlagefläche zur Verfügung steht, welche ein Umkippen verhindert.

Hat der Schieber 6 die vorgegebene (durch eine nicht dargestellte Steuerung gesteuerte) Stellung erreicht, so bleibt das Schieber-Basiselement 8 des Schiebers 6 stehen, während dessen Schieber-Kippelement 7 noch weiter nach rechts verfährt. Dabei werden die Stückgutteile 5 der entsprechenden Reihe 4 umgelegt bzw. seitlich gekippt, wie dieses aus Fig. 8 erkennbar ist, wobei im Falle von Fig. 8 die Beutelverschlüsse (in der Zeichnung) rechts liegen. Möchte man statt dessen zur Bildung eines entsprechenden Packmusters, daß eine bestimmte Reihe 4 von Stückgutteilen 5 so angeordnet wird, daß ihre Verschlüsse 13 (in der Zeichnung) links liegen, wie dieses in Fig. 9 dargestellt ist, so wird der Schieber 6 aus der in Fig. 7 dargestellten Stellung (insgesamt) wiederum um ein bestimmtes Stück nach links verfahren (s. Fig. 9).

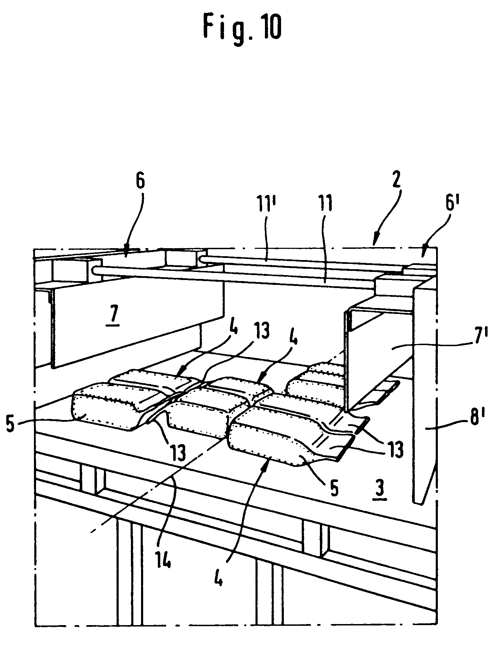

Fig. 10 zeigt eine gegenüber den Fig. 6 bis 9 noch etwas vergrößerte Ausschnitt-Darstellung, bei welcher in der durch eine strichpunktierte (Mittel-)Linie 14 des Packbleches 3 eine rechte Reihe 4 von Beuteln 5 so angeordnet ist, daß ihre Böden etwa an der Mittellinie 14 liegen, während die nach links nachfolgende Reihe 4 von Stückgutteilen 5 (von den einzelnen Reihen sind jeweils nur wenige Stückgutteile der besseren Übersicht halber dargestellt) spiegelsymmetrisch dazu angeordnet ist und die danach weiter links folgende Reihe wiederum so angeordnet ist, wie die in Fig. 10 rechts der Mittellinie liegende Reihe. Eine solche Anordnung hat den großen Vorteil, daß die Verschlüsse 13 zweier benachbarter Reihen 4 von Stückgutteilen 5 einander jeweils zugekehrt sind, was nicht nur zu einer guten Stapelfestigkeit beiträgt, sondern auch für eine spätere Entnahme höchst vorteilhaft ist.

Insgesamt wurde mit dem erfindungsgemäßen Beutel-Palettierer eine Vorrichtung geschaffen, mittels welcher ersichtlich beutelförmiges Stückgut od. dgl. in hervorragender Weise sowohl technisch als auch wirtschaftlich mit hohem Durchsatz zu palettieren ist, wobei darauf verwiesen wird, daß die eigentliche Palettierung - nach der jeweiligen Lagenbildung - in konventioneller Weise durch Abschieben einer fertig gebildeten Lage auf eine Palette od. dgl. bzw. eine bereits gebildete Stückgutlage erfolgt, und daß der "technische Kern" des erfindungsgemäßen Beutel-Palettierers in seiner Lagenbildungseinrichtung liegen dürfte.

## Patentansprüche

1. Vorrichtung zum Palettieren von insbesondere beutel- bzw. sackförmigen Stückgutteilen, mit einer Lagenbildungsfläche, welcher jeweils mindestens eine Reihe von Stückgutteilen mittels (wenigstens) eines Zuförderers zuzuführen ist, gekennzeichnet durch wenigstens einen Schieber (6, 6') od. dgl., mittels dessen eine zugeführte Reihe (4) von Stückgutteilen (5) aus ihrer Zuführposition (Fig. 6, 7) in eine Kipp-Position (z. B. Fig. 8) zu bringen ist, wobei der Schieber (6, 6') ein Schieber-Kippelement (7, 7') aufweist, mit dem die jeweilige Reihe (4) zugeführter Stückgutteile (5) aus ihrer (vorzugsweise aufrechten) Zuführstellung (s. Fig. 6, 7) in eine hierzu um 90° geschwenkte Palettierstellung (s. Fig. 8 bis 10) umzulegen ist.

2. Vorrichtung nach Anspruch 1, dadurch gekennzeichnet, daß das Schieber-Kippelement (7, 7') so ausgebildet ist, daß es jeweils mit einer in Zuführposition befindlichen, zugeführten Reihe (4) von Stückgutteilen (5) in formschlüssigem Eingriff ist.

3. Vorrichtung nach Anspruch 2, dadurch gekennzeichnet, daß das Schieber-Kippelement (7, 7') umgekehrt U-förmig ausgebildet ist, wobei der gegenseitige Abstand (a) der U-Schenkel (9, 9') wenigstens so groß ist wie die in Bewegungsrichtung (10) des Schiebers (6, 6') gemessene Breite/Tiefe (b) der Stückgutteile (5).

4. Vorrichtung nach einem oder mehreren der vorhergehenden Ansprüche, dadurch gekennzeichnet, daß der Schieber (6, 6') außer dem Schieber-Kippelement (7, 7') ein Schieber-Basiselement (8, 8') aufweist, welches relativ zu dem Schieber-Kippelement (7, 7') im wesentlichen horizontal beweglich ist.

5. Vorrichtung nach Anspruch 4, dadurch gekennzeichnet, daß das Schieber-Kippelement (7, 7') mittels eines Antriebes relativ zu dem Schieber-Basiselement (8, 8') translatorisch beweglich ist.

6. Vorrichtung nach einem oder mehreren der vorhergehenden Ansprüche, dadurch gekennzeichnet, daß der Lagenbildungsfläche (3) zwei Schieber (6, 6') zugeordnet sind.

7. Vorrichtung nach Anspruch 6, dadurch gekennzeichnet, daß sich die beiden Schieber (6, 6') in ihrer jeweiligen Zuführstellung an einander gegenüberliegenden Endabschnitten der Lagenbildungsfläche (3) befinden.

8. Vorrichtung nach einem oder mehreren der vorhergehenden Ansprüche, dadurch gekennzeichnet, daß die Schieber (6, 6') an (wenigstens) zwei parallelen Stangenführungen (11, 11') od. dgl. geführt sind, die mit Abstand oberhalb der Lagenbildungsfläche (3) angeordnet sind und sich parallel zu dieser erstrecken.

9. Vorrichtung nach einem oder mehreren der vorhergehenden Ansprüche, dadurch gekennzeichnet, daß der Abstand (h) der Schenkel (9, 9') des Schieber-Kippelementes (7, 7') zur Lagenbildungsfläche (3) größer ist als der Abstand (c) des Schieber-Basiselementes (8, 8').

10. Vorrichtung nach einem oder mehreren der vorhergehenden Ansprüche, dadurch gekennzeichnet, daß der Kraftangriffspunkt des Schieber-Kippelementes (7, 7') an den Stückgutteilen (5) in Abhängigkeit von Form und Größe der Aufstandsfläche der Stückgutteile (5) sowie deren (Haft-)Reibungsverhalten auf dem Packblech (3) in einer solchen Höhe liegt, daß ein Kippen der Stückgutteile (5) möglich ist.

## Claims

1. Apparatus for palletizing in particular bag or sack-shaped unit load items, having a layer-forming surface, to which at least one row of unit load items is to be supplied by means of (at least) one supply device, characterised by at least one pushing device (6, 6') or the like, by means of which a supplied row (4) of unit load items (5) is to be brought from its supply position (Figure 6, 7) into a tipped-over position (eg Figure 8), wherein the pushing device (6, 6') comprises a pushing-tipping element (7, 7'), with which the respective row (4) of supplied unit load items (5) is to be tipped over from its (preferably upright) supply position (see Figures 6, 7) into a palletizing position pivoted by 90° thereto (see Figures 8 to 10).

2. Apparatus according to claim 1, characterised in that the pushing-tipping element (7, 7') is formed in such a way that it is respectively positively engaged with a supplied row (4) of unit load items (5) which is in the supply position.

3. Apparatus according to claim 2, characterised in that the pushing-tipping element (7, 7') is formed as an inverted U, wherein the distance (a) of the U-limbs (9, 9') from each other is at least as great as the width/depth (b) of the unit load items (5) measured in the direction of movement (10) of the pushing device (6, 6').

4. Apparatus according to one or more of the preceding claims, characterised in that in addition to the pushing-tipping element (7, 7') the pushing device (6, 6') comprises a pushing-base element (8, 8') which can move in a substantially horizontal manner relative to the pushing-tipping element (7, 7').

5. Apparatus according to claim 4, characterised in that the pushing-tipping element (7, 7') can be moved in a translatory manner relative to the pushing-base element (8, 8') by means of a driving device.

6. Apparatus according to one or more of the preceding claims, characterised in that two pushing devices (6, 6') are associated with the layer-forming surface (3).

7. Apparatus according to claim 6, characterised in that the two pushing devices (6, 6') are located in their respective supply position at opposite end portions of the layer-forming surface (3).

8. Apparatus according to one or more of the preceding claims, characterised in that the pushing devices (6, 6') are guided on (at least) two parallel rod guides (11, 11') or the like which extend at a distance above the layer-forming surface (3) and in parallel therewith.

9. Apparatus according to one or more of the preceding claims, characterised in that the distance (h) from the limbs (9, 9') of the pushing-tipping element (7, 7') to the layer-forming surface (3) is greater than the distance (c) from the pushing-base element (8, 8')

10. Apparatus according to one or more of the preceding claims, characterised in that the force application point of the pushing-tipping element (7, 7') on the unit load items (5) lies, in dependence upon the shape and size of the contact surface of the unit load items (5) and the (adherence) frictional behaviour thereof on the packing plate (3), at such a height that unit load items (5) can be tipped over.

## Revendications

1. Dispositif de palettisation de marchandises en colis en particulier en forme de sachet ou de sacs, comprenant une surface de formation de couches à laquelle au moins une rangée de marchandises en colis est amenée à l'aide d'(au moins) un moyen d'alimentation, caractérisé par au moins un moyen de poussée (6, 6') ou analogue qui permet de faire passer une rangée amenée (4) de marchandises en colis (5) de sa position d'amenée (figures 6, 7) à une position basculée (ex. figure 8), le moyen de poussée (6, 6') comportant un élément de basculement par poussée (7, 7') qui permet de faire passer la rangée considérée (4) de marchandises en colis amenées (5) de sa position d'amenée (de préférence verticale) (voir figures 6, 7) à une position de palettisation (voir figures 8 à 10) basculée de 90° par rapport à la précédente.

2. Dispositif selon la revendication 1, caractérisé en ce que l'élément de basculement par poussée (7, 7') est conçu de façon à être en prise par complémentarité de formes avec une rangée amenée (4) de marchandises en colis (5) se trouvant en position d'amenée.

3. Dispositif selon la revendication 2, caractérisé en ce que l'élément de basculement par poussée (7, 7') présente la forme d'un U renversé, l'écartement (a) des branches (9, 9') du U étant au moins aussi grand que la largeur/profondeur (b) des marchandises en colis (5) mesurée dans le sens de déplacement (10) du moyen de poussée (6, 6').

4. Dispositif selon une ou plusieurs des revendications précédentes, caractérisé en ce que le moyen de poussée (6, 6') comporte, outre l'élément de basculement par poussée (7, 7'), un élément pousseur de base (8, 8') qui peut se déplacer sensiblement horizontalement par rapport à l'élément de basculement par poussée (7, 7').

5. Dispositif selon la revendication 4, caractérisé en ce que l'élément de basculement par poussée (7, 7') peut se déplacer en translation par rapport à l'élément pousseur de base (8, 8') à l'aide d'un moyen d'entraînement.

6. Dispositif selon une ou plusieurs des revendications précédentes, caractérisé en ce que deux moyens de poussée (6, 6') sont associés à la surface de formation de couches (3).

7. Dispositif selon la revendication 6, caractérisé en ce que, dans leur position d'amenée respective, les deux moyens de poussée (6, 6') se trouvent dans des portions extrêmes en vis-à-vis de la surface de formation de couches (3).

8. Dispositif selon une ou plusieurs des revendications précédentes, caractérisé en ce que les moyens de poussée (6, 6') sont guidés sur (au moins) deux guides à tiges parallèles (11, 11') ou analogues qui sont disposés à distance au-dessus de la surface de formation de couches (3) et s'étendent parallèlement à celle-ci.

9. Dispositif selon une ou plusieurs des revendications précédentes, caractérisé en ce que la distance (h) entre les branches (9, 9') de l'élément de basculement par poussée (7, 7') et la surface de formation de couches (3) est supérieure à la distance (c) entre l'élément pousseur de base (8, 8') et ladite surface de formation de couches (3).

10. Dispositif selon une ou plusieurs des revendications précédentes, caractérisé en ce que le point d'application de la force de l'élément de basculement par poussée (7, 7') sur les marchandises en colis (5) est calculé, selon la hauteur et la dimension de la surface de contact des marchandises en colis (5) ainsi que selon leur frottement (par adhérence) sur la tôle d'emballage (3), pour permettre aux marchandises en colis (5) de basculer.
